# EUROPÄISCHE PATENTANMELDUNG

(11) **EP 0 803 352 A1**
(43) Veröffentlichungstag der Anmeldung: **29.10.1997**
(21) Anmeldenummer: 97106320.1
(22) Anmeldetag: 17.04.1997
(51) Int. Cl.: B32B 27/32, B32B 27/08

(54) **Verpackungsfolie aus einer Siegelschicht und einer Trägerschicht**

(30) Priorität: 22.04.1996 DE 19615952
(71) Anmelder: BASF AKTIENGESELLSCHAFT, 67056 Ludwigshafen (DE)
(72) Erfinder: Seiler, Erhard, Dr., 67067 Ludwigshafen (DE); Schöne, Werner, Dr., 69198 Schriesheim (DE); Ballerstedt, Uwe, 67071 Ludwigshafen (DE)

(57) **Zusammenfassung**

Verpackungsfolie, enthaltend
a) eine Siegelschicht aus einer Mischung aus 50 bis 80 Gew.-% eines statistischen Terpolymerisats (I) aus 81 bis 94 Gew.-% Propylen, 0 bis 4 Gew.-% Ethylen und 6 bis 15 Gew.-% eines C₄-bis C₁₀-Alk-1-ens und 20 bis 50 Gew.-% wenigstens eines Ethylenpolymerisats (II)
b) und eine Trägerschicht aus einem thermoplastischen Polymeren.

Die erfindungsgemäße Verpackungsfolie zeichnet sich insbesondere durch eine leichte Siegelbarkeit, über einen weiten Temperaturbereich hinweg, aus.

## Beschreibung

Die vorliegende Erfindung betrifft eine Verpackungsfolie, enthaltend
a) eine Siegelschicht aus einer Mischung aus 50 bis 80 Gew.-% eines statistischen Terpolymerisats (I) aus 81 bis 94 Gew.-% Propylen, 0 bis 4 Gew.-% Ethylen und 6 bis 15 Gew.-% eines C₄-bis C₁₀-Alk-1-ens und 20 bis 50 Gew.-% wenigstens eines Ethylenpolymerisats (II)
b) und eine Trägerschicht aus einem thermoplastischen Polymeren.

Weiterhin betrifft die vorliegende Erfindung ein verfahren zur Herstellung der erfindungsgemäßen Verpackungsfolie sowie die Verwendung der erfindungsgemäßen Verpackungsfolie im Lebensmittelbereich.

Es ist bekannt, Kunststoffe als Verpackungsmaterialien zu verwenden, da diese leicht verarbeitet werden können, ein geringes Gewicht aufweisen, gegenüber Umwelteinflüssen beständig sind und ihr Aussehen stark verändert werden kann. Von mengenmäßig großer Bedeutung sind dabei insbesondere Polyolefine, speziell Polymerisate des Propylens und des Ethylens. Im Verpackungsbereich werden Kunststoffe vorwiegend in Form von Folien eingesetzt.

In den europäischen Patentschriften EP-B 0178 061 und EP-B 0292 197 werden Verpackungsfolien beschrieben, die aus einer Mischung aus drei verschiedenen Kunststoffen bestehen, einem Ethylenpolymerisat, einem But-1-enpolymerisat und einem Propylenpolymerisat. Diese Verpackungsfolien zeichnen sich u.a. durch gute optische Eigenschaften aus. Darüber hinaus sind sie geeignet, abziehbare dichte Verschlüsse zu bilden.

Weiterhin sind aus der EP-B 0207 626 Verpackungen aus einem Behälter bekannt, die eine Heißsiegelschicht aus verschiedenen Polypropylenharzen enthalten, welche sich vor allem durch ihre deutlich unterschiedlichen Fließfähigkeiten voneinander unterscheiden. Derartige Verpackungen lassen sich relativ leicht versiegeln und werden deshalb insbesondere zur Aufbewahrung von Lebensmitteln eingesetzt.

Verpackungsmaterialien müssen in einigen Anwendungsbereichen bestimmte, oft gegensätzliche Eigenschaften aufweisen, die mit den bisher bekannten Verpackungen nicht immer befriedigend realisiert werden können. An Verpackungsfolien werden beispielsweise teilweise erhebliche Anforderungen hinsichtlich ihrer mechanischen Beständigkeit und ihrer Dichtigkeit gestellt, die sie gleichzeitig mit einer guten Verarbeitbarkeit und einer leichten Abziehfähigkeit erfüllen müssen. Darüber hinaus sollen derartige Verpackungsfolien bereits bei möglichst niedrigen Temperaturen und mit möglichst vielen anderen Folien oder Formteilen siegelbar sein.

In der DE-A 42 30 869 werden Verpackungsfolien beschrieben, die neben einer Siegelschicht aus einem statistischen Terpolymerisat des Propylens noch eine Trägerschicht aus einem thermoplastischen Polymeren enthalten. Derartige Verpackungsfolien weisen u.a. eine hohe mechanische Beständigkeit, eine gute Verarbeitbarkeit und eine leichte Abziehfähigkeit auf. Sie sind darüber hinaus bereits bei relativ niedrigen Temperaturen siegelbar. Es hat sich aber gezeigt, daß die dort beschriebenen Verpackungsfolien dazu neigen, bei der Folienextrusion störende Ablagerungen an der Düse zu bilden, die zur Bildung von Streifen, zu einer ungleichmäßigen Foliendicke und zu Inhomogenitäten in der Folie führen können. Diese Ablagerungen bewirken auch eine Verringerung der durchschnittlichen Extrusionslaufzeiten.

Der vorliegenden Erfindung lag daher die Aufgabe zugrunde, den genannten Nachteilen abzuhelfen und eine verbesserte Verpackungsfolie zu entwickeln, die sich durch eine hohe mechanische Beständigkeit und eine hohe Dichtigkeit auszeichnet, leicht abziehbar ist und leicht verarbeitet werden kann.

Demgemäß wurde eine neue Verpackungsfolie gefunden, enthaltend
a) eine Siegelschicht aus einer Mischung aus 50 bis 80 Gew.-% eines statistischen Terpolymerisats (I) aus 81 bis 94 Gew.-% Propylen, 0 bis 4 Gew.-% Ethylen und 6 bis 15 Gew.-% eines C₄-bis C₁₀-Alk-1-ens und 20 bis 50 Gew.-% wenigstens eines Ethylenpolmerisats (II)
b) und eine Trägerschicht aus einem thermoplastischen Polmeren.

Bevorzugt enthält die in der erfindungsgemäßen Verpackungsfolie verwendete Siegelschicht a) 55 bis 80 Gew.-% eines statistischen Terpolymerisats (I) und 20 bis 45 Gew.-% wenigstens eines Ethylenpolymerisats(II).

Als statistische Terpolymerisate (I) werden insbesondere solche Terpolymerisate verwendet, die aus 88 bis 93 Gew.-% Propylen, 1 bis 3 Gew.-% Ethylen und 6 bis 11 Gew.-% eines C₄-bis C₁₀-Alk-1-ens bestehen. Unter C₄-bis C₁₀-Alk-1-enen sollen dabei bevorzugt But-1-en, Pent-1-en, Hex-1-en, Hept-1-en oder Oct-1-en verstanden werden, wobei sich But-1-en,Hex-1-en oder Oct-1-en als Comonomeres besonders gut eignen. Ein besonders bevorzugtes Comonomeres ist dabei But-1-en. Ganz besonders bevorzugt sind solche Verpackungsfolien, bei denen das statistische Terpolymerisat der Siegelschicht a) aus 88 bis 92 Gew.-% Propylen, 1,0 bis 2 Gew.-% Ethylen und aus 7,0 bis 11 Gew.-% eines C₄- bis C₁₀-Alk-1-ens besteht.

Die erfindungsgemäß zu verwendenden statistischen Terpolymerisate (I) weisen üblicherweise DSC-Schmelzpunkte von 125 bis 137°C und Schmelzflußindices von 2 bis 12 g/10 min, insbesondere von 4 bis 8 g/10 min, bei 230⁰C und 2,16 kg, nach DIN 53735 auf.

Die zu diesem Zweck verwendeten statistischen Terpolymerisate (I) sind u.a. durch Ziegler-Natta-Polymerisation mit titan- und magnesiumhaltigen Katalysatoren, durch Polymerisation mit chromhaltigen Phillipskatalysatoren oder durch Polymerisation mit metallocenhaltigen Katalysatoren erhältlich (EP-A 45977, US-A 4857 613, US-A 52 88 824, EP-A 323 716). Die Polymerisation der einzelnen Comonomeren kann dabei sowohl in der Gasphase, als auch in einer Suspension oder in Lösung vorgenommen werden. Die Herstellung der statistischen Terpolymerisate (I) erfolgt in den, in der Technik üblichen Polymerisationsreaktoren, beispielsweise in gerührten Autoklaven oder Reaktorkaskaden in diskontinuierlicher, halbkontinuierlicher oder kontinuierlicher Fahrweise.

Ein bevorzugtes Verfahren zur Herstellung der statistischen Terpolymerisate (I) ist die Gasphasenpolymerisation der Comonomere in Anwesenheit von Ziegler-Natta-Katalysatoren. Dabei polymerisiert man ein gasförmiges Gemisch aus Propylen, Ethylen und einem C₄- bis C₁₀-Alk-1-en üblicherweise bei einer Temperatur von 60 bis 90°C, einem Druck von 20 bis 40 bar und einer mittleren Verweilzeit des Reaktionsgemisches von 0,5 bis 5 Stunden. Bevorzugt sind bei diesem Verfahren Drücke von 20 bis 35 bar, Temperaturen von 60 bis 80°C und mittlere Verweilzeiten des Reaktionsgemisches von 1,5 bis 4 Stunden. Vorzugsweise wird die Gasphasenpolymerisation in einem kontinuierlich betriebenen Rührkessel durchgeführt, der ein Festbett aus feinteiligem Polymerisat enthält, welches üblicherweise durch geeignete Rührvorrichtungen in Bewegung gehalten wird. Bei diesem Verfahren wird das Verhältnis zwischen dem Partialdruck des Propylens einerseits und dem des Ethylens und des C₄- bis C₁₀-Alk-1-ens andererseits vorzugsweise auf 5:1 bis 100:1 eingestellt. Das Verhältnis der Partialdrücke zwischen Ethylen und dem C₄- bis C₁₀-Alk-1-en wiederum liegt in diesem Fall üblicherweise im Bereich von 1:1 bis 50:1.

Zur Herstellung der erfindungsgemäß zu verwendenden Siegelschicht a) werden das statistische Terpolymerisat (I) und das oder die Ethylenpolymerisate (II) in geeigneten Vorrichtungen beispielsweise in Extrudern oder Mischern miteinander vermengt.

Weiterhin enthält die in der erfindungsgemäßen Verpackungsfolie verwendete Siegelschicht noch wenigstens ein Ethylenpolymerisat (II), wobei unter dieser Bezeichnung sowohl Homopolymerisate des Ethylens als auch Copolymerisate des Ethylens mit anderen Comonomeren verstanden werden. Bevorzugte Homopolymerisate sind sowohl nieder- als auch hochdichte Homopolymerisate des Ethylens mit Dichten von 0,850 bis 0,980 g/cm³. Geeignete Copolymerisate des Ethylens enthalten üblicherweise noch untergeordnete Anteile von ungesättigten Comonomeren, beispielsweise von Vinylacetat oder von C₃- bis C₁₀-Alk-1-enen, beispielsweise von Propylen, But-1-en, Hex-1-en oder Oct-1-en. Besonders bevorzugte Siegelschichten a) enthalten ein Ethylenpolymerisat (II) mit einem Dichtebereich von 0,870 bis 0,935 g/cm³.

Die Herstellung derartiger Ethylenpolymerisate (II) erfolgt üblicherweise durch Niederdruckpolymerisation mit metallhaltigen Katalysatoren oder durch Hochdruckpolymerisation mit radikalisch zerfallenden Initiatoren. Bei den metallhaltigen Katalysatoren kann es sich auch um Katalysatoren handeln, die Metallocene enthalten. Die Polymerisation kann dabei mit den in der Technik üblichen Reaktoren, sowohl in der Gasphase, in Lösung als auch in einer Aufschlämmung diskontinuierlich, halbkontinuierlich oder kontinuierlich durchgeführt werden. Bei solchen Verfahren können neben dem Ethylen noch in untergeordneten Mengen andere Comonomere wie beispielsweise Vinylacetat oder C₃- bis C₁₀-Alk-1-ene mitpolymerisiert werden. Die hier beschriebenen Herstellungsverfahren sind dem Fachmann bekannt.

Die in der Siegelschicht a) verwendeten Ethylenpolymerisate (II) sind u.a. unter den Handelsnamen Lupolen® oder Luflexen® von der BASF Aktiengesellschaft erhältlich. In der Siegelschicht a) können auch mehrere verschiedene Ethylenpolymerisate (II) vorhanden sein.

Neben der Siegelschicht a) enthält die erfindungsgemäße Verpackungsfolie noch wenigstens eine Trägerschicht b) aus einem thermoplastischen Polymeren. Die erfindungsgemäße Verpackungsfolie kann auch zwei oder mehrere Trägerschichten b) aus einem, zwei oder mehreren thermoplastischen Polymeren aufweisen. Sie kann auch eine Barriereschicht, beispielsweise aus einem Copolymerisat aus Ethylen und Vinylalkohol oder aus Polyvinylidenchlorid, sowie Haftvermittler-Schichten enthalten.

Unter der Bezeichnung thermoplastische Polymere sollen in diesem Zusammenhang vor allem Polymere wie Polyamide, Polystyrole, Polyester, Polyoxyalkylene, Polyurethane, Polyacrylate, Polyvinylchlorid, Polycarbonate und Polyolefine verstanden werden, wobei Polyolefine bevorzugt als Trägerschichten b) verwendet werden. Besonders bevorzugte Trägerschichten b) bestehen aus Propylenpolymerisaten, beispielsweise aus Propylenhomopolymerisaten oder Copolymerisaten des Propylens mit untergeordheten Anteilen anderer C₂- bis C₁₀-Alk-1-ene. Derartige Propylenpolymerisate weisen üblicherweise Schmelzflußindices von 0,5 bis 15 g/10 min, insbesondere von 1,0 bis 10 g/10 min, nach DIN 53735 bzw. nach ISO 1133, bei 230°C und 2,16 kg auf. Diese thermoplastischen Polymere können nach dem Fachmann geläufigen Verfahren hergestellt werden, so daß diesbezüglich auf die einschlägige Literatur verwiesen werden kann. Die Herstellung der bevorzugt verwendeten Polyolefine kann analog der Herstellung des statistischen Terpolymerisats (I) oder des Ethylenpolymerisats (II) durchgeführt werden.

In der erfindungsgemäßen Verpackungsfolie liegen die Schichtdicken der Siegelschicht a) vorzugsweise im Bereich von 1 bis 20 µm, insbesondere im Bereich von 2 bis 10 µm, und die der Trägerschicht b), die auch aus zwei oder mehreren Trägerschichten b) bestehen kann, vorzugsweise im Bereich von 15 bis 350 µm, insbesondere im Bereich von 20 bis 250 µm.

Sowohl in der Siegelschicht a) als auch in der Trägerschicht b) können noch bis zu 50 Gew.-%, vorzugsweise 10 bis 30 Gew.-% üblicher Füllstoffe wie beispielsweise Kreide, Talkum, Kaolin oder Bariumsulfat enthalten sein. Weiterhin können diesen Schichten a) und b) auch noch Additive wie beispielsweise Stabilisatoren, Gleitmittel, Antioxidantien, Antistatika, UV-Absorber, Viskositätsmodifizierer, Antiblockmittel, Schlagzähmacher, Mattierungsmittel, Flammschutzmittel, Biostabilisatoren, Nukleierungsmittel oder Härter beigemischt werden.

Die Herstellung der erfindungsgemäßen Verpackungsfolie erfolgt üblicherweise durch möglichst flächengleiches Auftragen der Siegelschicht a) auf die Trägerschicht b). Derartige Herstellungsverfahren für mehrschichtige Folien erfolgen üblicherweise nach dem Beschichtungsverfahren, dem Kaschierverfahren oder dem Blas-/Breitschlitz-Coextrusionsverfahren.

Beim Beschichtungsverfahren beispielsweise wird zunächst die zu verwendende Beschichtungsmasse auf eine Trägerbahn aufgetragen, anschließend werden die Arbeitsgänge Gelieren, Kühlen, Abziehen und Aufwickeln durchgeführt. Bei der eigentlichen Coextrusionsbeschichtung wird in einer Beschichtungsanlage mit einem Schmelzefilm, der in einem Extruder aufgeschmolzen und über eine Breitschlitzdüse ausgetragen wird und aus einer oder mehreren Polymerschichten bestehen kann, beschichtet. Der dabei entstehende Verbund aus der Siegelschicht a) und der Trägerschicht b) wird anschließend in einer Kühl-Anpreßwalzen-Einheit abgekühlt und geglättet. Danach erfolgt die Aufwicklung der Verbundbahn in einer entsprechenden Wickelstation.

Beim Kaschierverfahren werden analog dem Beschichtungsverfahren ebenfalls die Arbeitsgänge Auftragen der Beschichtungsmasse auf die Trägerbahn, Glätten und Kühlen, Abziehen und Aufwickeln durchgeführt. Bei der eigentlichen Extrusionskaschierung läßt man eine vorgefertigte Trägerbahn in einen Glättwerkwalzenstuhl, der 3 bis 4 Walzen aufweist, einlaufen. Dabei wird die Trägerbahn vor dem ersten Walzenspalt mit einem Schmelzefilm, der in einem Extruder aufgeschmolzen und über eine Breitschlitzdüse ausgetragen wird, beschichtet. Vor dem zweiten Walzenspalt läßt man eine zweite vorgefertigte Bahn zulaufen. Der dabei entstehende Gesamtverbund wird beim Durchlauf durch den zweiten Walzenspalt geglättet, anschließend gekühlt, abgezogen und in einer Wickelstation aufgewickelt.

Nach dem Blas-oder Breitschlitz-Coextrusionsverfahren werden allgemein zunächst die Mischung der Siegelschicht a) und das thermoplastische Polymer der Trägerschicht b) in unterschiedlichen Extrudern unter geeigneten Bedingungen aufgeschmolzen und anschließend in Form der Schmelzeströme unter Ausformen eines Mehrschichten-Schmelzestroms im Coextrusionswerkszeug zusammengeführt. Danach erfolgt das Austragen, Abziehen und Abkühlen der Mehrschichtenschmelzebahn und das Aufwickeln des Verbundes. Dieses Coextrusionsverfahren wird bevorzugt zur Herstellung der erfindungsgemäßen Verpackungsfolie angewandt. Auf diese Weise können sowohl nicht orientierte oder orientierte Flachfolien als auch Schlauchfolien hergestellt werden.

Derartige Verfahren werden üblicherweise bei Temperaturen von 170 bis 280°C, Drücken von 70 bis 200 bar und mittleren Durchlaufzeiten von 5 bis 20 min. durchgeführt.

Die erfindungsgemäße Verpackungsfolie zeichnet sich insbesondere durch eine gute Verbundhaftung zwischen der Siegelschicht a) und der Trägerschicht b) aus, ohne daß dabei zusätzliche Haftvermittler oder "Primer" mitverwendet werden müssen. Darüber hinaus weist die erfindungsgemäße Verpackungsfolie eine hohe mechanische Beständigkeit und eine hohe Dichtigkeit, insbesondere gegenüber Luft auf. Sie läßt sich über einen breiten Siegeltemperaturbereich hinweg gut verarbeiten und zeigt gute Eigenschaften hinsichtlich ihrer Abziehbarkeit.

Die erfindungsgemäßen Verpackungsfolien eignen sich aufgrund ihrer guten Abziehbarkeit insbesondere für den Lebensmittelbereich. Darüber hinaus können sie auch als Verpackungsmaterialien für andere Konsumbereiche, beispielsweise im Unterhaltungsbereich eingesetzt werden.

### Beispiele

I. Herstellung einer erfindungsgemäßen Verpackungsfolie
   Durch Breitschlitzextrusion über einen Hauptextruder (Schnekkendurchmesser 90 mm; Schneckenlänge 25 x Durchmesser), in welchem die Hauptschicht plastifiziert wurde und über einen Nebenextruder (Schneckendurchmesser 45 mm; Schneckenlänge 25 x Durchmesser) zur Plastifizierung der Siegelschicht a) wurden coextrudierte Folien hergestellt.
   Die aus beiden Extrudern kommenden Schmelzeströme wurden dabei über ein Adaptersystem zusammengeführt, übereinandergeschichtet und über eine Breitschlitzdüse ausgetragen. Die Massetemperatur im Hauptextruder betrug jeweils 245°C, im Nebenextruder lag sie zwischen 225 und 240°C.
   Die dabei erhaltenen Folien bestanden aus einer Siegelschicht a) mit einer Schichtdicke von 10 µm und einer Trägerschicht b)mit einer Schichtdicke von 75 µm.
   Die Trägerschicht b) bestand dabei aus einem Propylencopolymerisat mit 7,0 Gew.-% einpolymerisiertem Ethylen und einem Schmelzflußindex von 4,0 g/10 min, bei 230°C und 2,16 kg, nach DIN 53735. Die Siegelschicht a) bestand aus den in der nachfolgenden Tabelle beschriebenen Polymerisatmischungen. Beide Schichten wurden jeweils ohne Verwendung eines Haftvermittlers coextrudiert.
II. Prüfung der Extrudierbarkeit
   Zur Bewertung der Extrudierbarkeit wurden die für die Siegelschicht beanspruchten Zusammensetzungen jeweils für sich allein mit Hilfe eines Laborextruders (Schneckendurchmesser 30 mm, Schneckenlänge 750 mm) über eine Breitschlitzdüse (Breite: 250 mm; Spaltwerte: 0,5 mm) zu einer 50 µm dicken Monofolie extrudiert (Massetemperatur: 260°C)
   Nach einer Laufzeit von 7 Stunden wurde jeweils die Extrusion unterbrochen und die Düsenlippen auf das Vorhandensein von Ablagerungen hin untersucht. Die Untersuchung erfolgte visuell.
III. Eigenschaften der erfindungsgemäßen Verpackungsfolie
   Die unter (I) erhaltene Verpackungsfolie wurde im Hinblick auf ihre Siegel- und Abziehfähigkeit hin untersucht.
   Dabei wurde die Verpackungsfolie auf eine Propylenhomopolymerfolie mit einem Schmelzflußindex von 3,5 g/10 min., bei 230⁰C und 2,16 kg, nach DIN 53 735 und einer Schichtdicke von 200 µm aufgesiegelt. Die Auflagefläche des Siegelbalkens betrug dabei 150 x 10 mm, der Siegeldruck 0,7 N/mm² und die Siegelzeit 0,5 Sekunden. Die Siegeltemperaturen lagen zwischen 110 und 180°C. Die auf diese Weise erzeugten Siegelnähte wurden im Zugversuch nach ISO 527 geprüft, um die Güte der Siegelnaht bzw. die zum Öffnen der Naht benötigten Abziehkräfte zu ermitteln.
   Dazu wurden die freien Enden der miteinander versiegelten Folien in die Zugprüfmaschine eingespannt und im Winkel von 180°C auseinandergezogen. Die Probenbreite betrug 15 mm, die Abzugsgeschwindigkeit 100 mm/min.
   Die zum Aufschälen der Naht benötigte Abziehkraft wurde dabei jeweils in Abhängigkeit von der Siegeltemperatur registriert. Wünschenswert sind dabei Abziehkräfte (Schälkräfte), die bereits bei niedrigen Siegeltemperaturen nicht zu hoch liegen.
   Von den erhaltenen Folien wurde die Siegelschicht ferner auf ihre Transparenz hin untersucht.

Die Ergebnisse dieser Messungen können der nachfolgenden Tabelle entnommen werden.

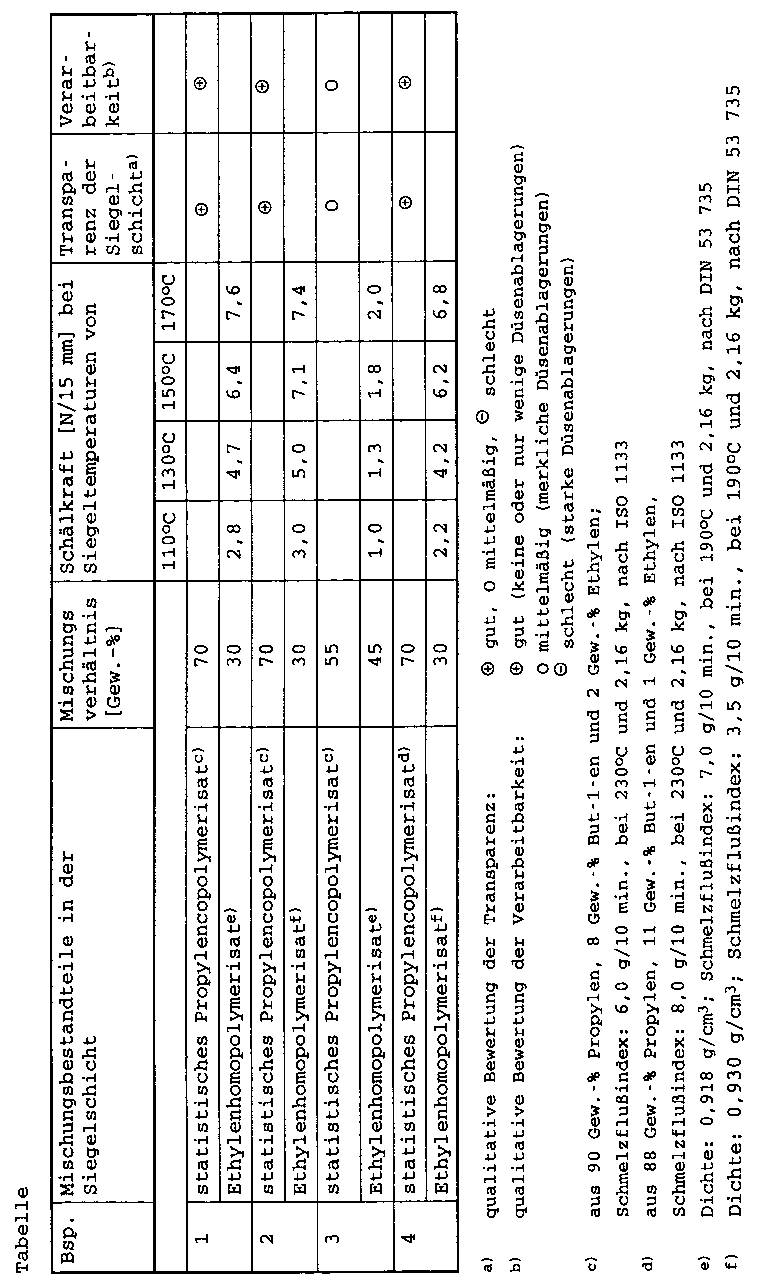

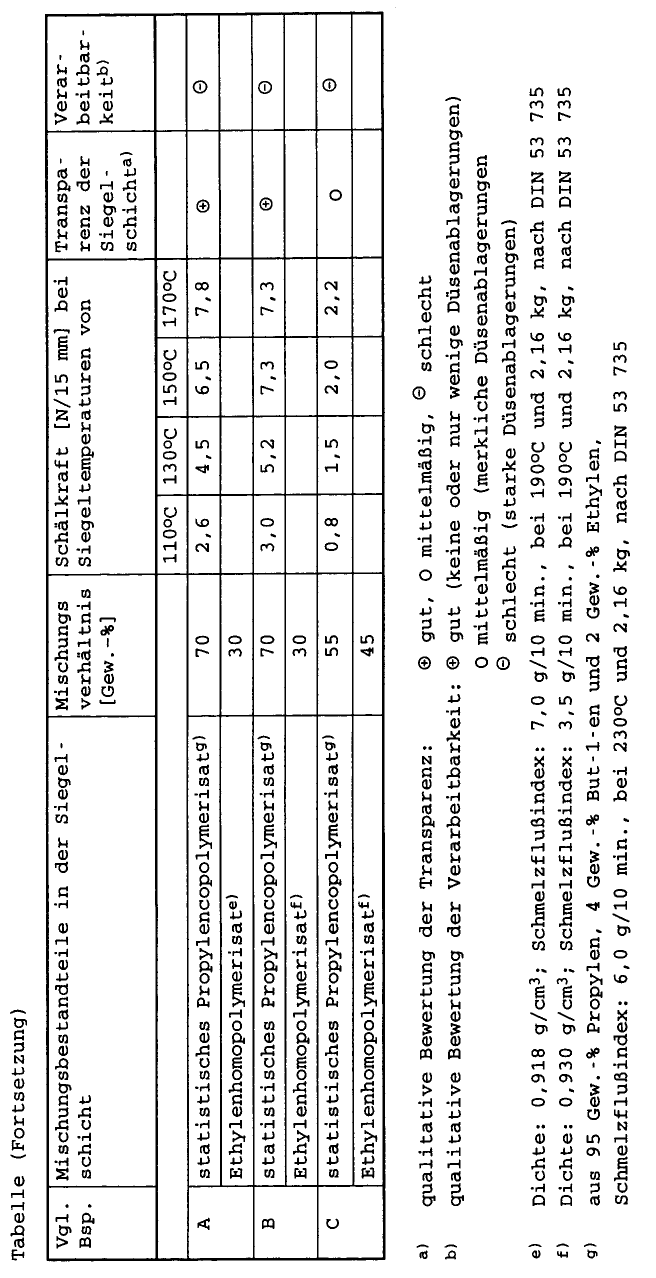

Der Vergleich zwischen den erfindungsgemäßen Beispielen 1 bis 4 und den Vergleichsbeispielen A bis C zeigt, daß die erfindungsgemäßen Verpackungsfolien bei vergleichbar guter Abziehbarkeit (geringe Schälkraft) und guter Transparenz eine deutlich verbesserte Verarbeitbarkeit aufweisen, was daran erkennbar ist, daß kaum Düsenablagerungen festgestellt werden können.

## Patentansprüche

1. Verpackungfolie, enthaltend
a) eine Siegelschicht aus einer Mischung aus 50 bis 80 Gew.-% eines statistischen Terpolymerisats (I) aus 81 bis 94 Gew.-% Propylen, 0 bis 4 Gew.-% Ethylen und 6 bis 15 Gew.-% eines C₄- bis C₁₀-Alk-1-ens und 20 bis 50 Gew.-% wenigstens eines Ethylenpolymerisats (II)
b) und eine Trägerschicht aus einem thermoplastischen Polymeren.

2. Verpackungsfolie nach Anspruch 1, wobei eine Siegelschicht a) verwendet wird, die 55 bis 80 Gew.-% eines statistischen Terpolymerisats (I) und 20 bis 45 Gew.-% wenigstens eines Ethylenpolymerisats (II) enthält.

3. Verpackungsfolie nach den Ansprüchen 1 oder 2, wobei die Siegelschicht a) ein statistisches Terpolymerisat (I) enthält, das aus 88 bis 93 Gew.-% Propylen, 1 bis 3 Gew.-% Ethylen und 6 bis 11 Gew.-% eines C₄-bis C₁₀-Alk-1-ens besteht.

4. Verpackungsfolie nach den Ansprüchen 1 bis 3, wobei die Siegelschicht a) ein statistisches Terpolymerisat (I) enthält, bei dem als C₄-bis C₁₀-Alk-1-en But-1-en verwendet wird.

5. Verpackungsfolie nach den Ansprüchen 1 bis 4, wobei eine Siegelschicht a) verwendet wird, die ein Ethylenpolymerisat (II) mit einem Dichtebereich von 0,870 bis 0,935 g/cm³ enthält.

6. Verpackungsfolie nach den Ansprüchen 1 bis 5, wobei die Trägerschicht b) aus einem Polyolefin besteht.

7. Verpackungsfolie nach den Ansprüchen 1 bis 6, wobei die Trägerschicht b) aus einem Propylenpolymerisat besteht.

8. Verpackungsfolie nach den Ansprüchen 1 bis 7, wobei die Siegelschicht a) eine Schichtdicke von 1 bis 20 µm und die Trägerschicht b) eine Schichtdicke von 15 bis 350 µm aufweist.

9. Verfahren zur Herstellung einer Verpackungsfolie gemäß den Ansprüchen 1 bis 8, dadurch gekennzeichnet, daß zunächst die Mischung der Siegelschicht a) und das thermoplastische Polymere der Trägerschicht b) im geschmolzenen Zustand in einem Extruder miteinander coextrudiert werden und anschließend als Verbund aus dem Extruder ausgetragen, abgezogen und abgekühlt werden.

10. Verwendung der Verpackungsfolie gemäß den Ansprüchen 1 bis 8 im Lebensmittelbereich.
